# EUROPÄISCHE PATENTSCHRIFT

(11) **EP 3 276 700 B1**
(45) Veröffentlichungstag und Bekanntmachung des Hinweises auf die Patenterteilung: **01.03.2023**
(21) Anmeldenummer: 16181222.7
(22) Anmeldetag: 26.07.2016
(51) Int. Cl.: H01M 50/107, H01M 50/109, H01M 50/121, H01M 50/133, H01M 10/04, H01M 10/052, H01M 10/0587

(54) **ELEKTROCHEMISCHE ZELLE**
ELECTROCHEMICAL CELL
CELLULE ÉLECTROCHIMIQUE

(43) Veröffentlichungstag der Anmeldung: 31.01.2018
(73) Patentinhaber: VARTA Microbattery GmbH, 73479 Ellwangen Jagst (DE)
(72) Erfinder: Brenner, Rolf, 73479 Ellwangen (DE); Ernsperger, Jürgen, 73491 Neuler (DE); Fischer, Claus-Christian, 73479 Ellwangen (DE); Gaugler, Winfried, 73479 Ellwangen (DE); Hald, Rainer, 73479 Ellwangen (DE); Kilibarda, Goran, 73525 Schwäbisch Gmünd (DE); Kreidler, Bernd, 73479 Ellwangen (DE)
(74) Vertreter: Ostertag & Partner Patentanwälte mbB

(56) Entgegenhaltungen:
- EP-A1- 2 367 218
- WO-A1-2010/089152
- WO-A2-2010/146154
- JP-A- 2004 006 157
- JP-A- 2010 113 963
- US-A1- 2010 279 162
- US-A1- 2014 120 413

## Beschreibung

Die nachfolgend beschriebene Erfindung betrifft eine elektrochemische Zelle.

Besonders bekannte Ausführungsformen elektrochemischer Zellen sind Knopf- und Rundzellen. Knopfzellen weisen meist ein zylindrisches Gehäuse auf, dessen Höhe gleich seinem Durchmesser oder kleiner als dieser ist. Bei Rundzellen ist das Gehäuse ebenfalls zylindrisch ausgebildet, allerdings überschreitet seine Höhe seinen Durchmesser.

In den Gehäusen können jeweils sehr unterschiedliche elektrochemische Systeme enthalten sein. Sehr verbreitet sind Zellen auf Basis von Zink/Luft, Zink/MnO₂ und Nickel/Zink. Auch sekundäre (wiederaufladbare) Systeme sind sehr verbreitet. Beispiele hierfür sind Nickel/Metallhydrid-Zellen, Nickel/Cadmium-Zellen und Lithium-Ionen-Zellen.

Das zylindrische Gehäuse von Rund- und Knopfzellen besteht klassisch in aller Regel aus zwei festen, meist metallischen Gehäuseteilen, zwischen denen eine elektrisch isolierende Dichtung angeordnet ist. Eines der Gehäuseteile steht in elektrischer Verbindung mit der positiven Elektrode und ist entsprechend positiv gepolt. Das andere steht in elektrischer Verbindung mit der negativen Elektrode und ist entsprechend negativ gepolt. Die Dichtung soll einen elektrischen Kontakt zwischen den entgegengesetzt gepolten Gehäuseteilen unterbinden. Darüber hinaus soll sie einem Entweichen und einem Eindringen von Flüssigkeit und Feuchtigkeit aus dem und in das Gehäuse entgegenwirken.

Die Verwendung metallischer Gehäuse ist mit mancherlei Nachteilen verbunden. Ihre Herstellung erfolgt mittels eines aufwendigen Tiefziehverfahrens und ein korrosiver Angriff auf das Gehäuse durch den Elektrolyten oder durch im Lade- und Entladebetrieb gebildete sonstige korrosive Substanzen kann trotz gezielter Vorkehrungen niemals gänzlich ausgeschlossen werden.

Rundzellen, deren Gehäuse zumindest teilweise aus einem Kunststoff wie PEEK bestehen können, sind aus der US 2010/0279162 A1 bekannt.

Der vorliegenden Erfindung lag die Aufgabe zugrunde, Knopf- und Rundzellen mit einem Gehäuse bereitzustellen, das die erwähnten Nachteile nicht aufweist.

Die gestellte Aufgabe wird durch die elektrochemische Zelle mit den Merkmalen des Anspruchs 1 gelöst. Bevorzugte Ausführungsformen der erfindungsgemäßen Zelle sind in den abhängigen Ansprüchen 2 bis 7 angegeben. Der Wortlaut sämtlicher Ansprüche wird hiermit durch Bezugnahme zum Inhalt der vorliegenden Beschreibung gemacht.

Eine elektrochemische Zelle gemäß der vorliegenden Erfindung zeichnet sich stets durch die folgenden Merkmale aus:
- Sie umfasst einen Elektrodenverbundkörper mit mindestens einer positiven und mindestens einer negativen Elektrode: In einem solchen Verbundkörper sind die mindestens eine positive Elektrode und die mindestens eine negative Elektrode fest miteinander verbunden, meist über Lamination oder Verklebung. Zwischen entgegensetzt gepolten Elektroden ist meist ein Separator angeordnet, bei dem es sich um eine poröse Kunststofffolie, beispielsweise aus einem Polyolefin, handeln kann.
   Gewickelte Elektrodenverbundkörper sind aus dem Stand der Technik bekannt. Knopfzellen mit gewickelten Elektrodenverbundkörper sind beispielsweise in der WO 2010/146154 A2 und in der WO 2010/089152 A1 beschrieben. Die in diesen Dokumenten beschriebenen Elektrodenverbundkörper können auch für eine erfindungsgemäße Zelle eingesetzt werden.
   Zur Herstellung solcher gewickelter Elektrodenverbundkörper wird in einem ersten Schritt eine bandförmige Einzelzelle hergestellt. Hierzu werden bandförmige positive und bandförmige negative Elektroden miteinander sowie mit einem oder mehreren bandförmigen Separatoren kombiniert. Die Elektroden können beispielsweise auf gegenüberliegende Seiten eines Separators laminiert werden. Die so hergestellte bandförmige Einzelzelle wird dann einer Wickelvorrichtung zugeführt und in dieser zu den gewickelten Elektrodenverbundkörper verarbeitet. Hierzu wird die Einzelzelle üblicherweise auf einen Wickeldorn oder einen Wickelkern aufgewickelt. Nach einer meist vordefinierten Anzahl von Windungen (unter einer Windung wird hierbei jeder vollständige Umlauf des Verbundes um den Wickeldorn oder Wickelkern verstanden) wird der Wickelvorgang abgebrochen. Der gebildete gewickelte Verbundkörper wird beispielsweise mittels eines Schneid- oder Stanzwerkzeugs von dem unmittelbar nachfolgenden, noch nicht gewickelten Abschnitt der Einzelzelle abgetrennt.
- Der Elektrodenverbundkörper ist mit einem Elektrolyten getränkt: Die Wahl des Elektrolyten hängt davon ab, welches elektrochemische System für die Zelle gewählt wird. Handelt es sich bei der erfindungsgemäßen Zelle um eine Nickel/Metallhydrid-Zelle, so ist der Elektrolyt eine Lauge. Handelt es sich bei der Zelle um eine Lithium-Ionen-Zelle, so setzt sich der Elektrolyt in der Regel aus einer Mischung organischer Carbonate zusammen, in welcher ein Lithium-Leitsalz gelöst ist.
- Sie umfasst ein als Hohlzylinder ausgebildetes Gehäuse mit einem flüssigkeitsdicht ausgebildeten, ringförmigen Innenraum, der um eine zentrale Durchbrechung oder Ausnehmung herum angeordnet ist: Wie bei klassischen Zellen besteht die Primärfunktion des Gehäuses darin, einem Entweichen von Flüssigkeit (Elektrolyt) und einem Eindringen von Feuchtigkeit aus dem und in das Gehäuse entgegenwirken.
- Der mit dem Elektrolyten getränkte Elektrodenverbundkörper ist in dem ringförmigen Innenraum angeordnet: Ziel ist in aller Regel, dass der Elektrodenverbundkörper den Innenraum möglichst effizient ausfüllt. Ein Totvolumen im Innenraum wirkt sich negativ auf die Energiedichte aus.

Besonders zeichnet sich die erfindungsgemäße Zelle dadurch aus, dass das Gehäuse aus PEK (Polyetherketon) besteht.

Bei Polyetherketonen handelt es sich bekanntlich um hochtemperaturbeständige thermoplastische Kunststoffe. Die gebräuchlichsten Polyetherketone sind Polyaryletherketone (kurz: PAEK).

Zu den bekanntesten und wichtigsten Vertretern von PEK zählt PEEK (Polyetheretherketon). Besonders bevorzugt besteht auch das Gehäuse der erfindungsgemäßen Zelle aus PEEK.

Die Schmelztemperatur von PEEK liegt bei ca. 335 °C bis 345 °C. Es existieren diverse Abkömmlinge (z.B. PEEEK (Poly(etheretheretherketon)) und PEKK (Poly(etherketonketon))), welche geringfügig andere Schmelzpunkte aufweisen (z. B. PEKK ca. 391 °C oder PEEEK ca. 324 °C). Alle diese Abkömmlinge sind als Gehäusematerialien für die erfindungsgemäße Zelle geeignet.

Polyetherketone sind gegenüber fast allen organischen und anorganischen Chemikalien beständig. Empfindlich sind sie lediglich gegenüber UV-Strahlung sowie gegenüber stark sauren und oxidierenden Bedingungen, wie sie in der Regel in Batterien jedoch nicht anzutreffen sind.

Die Verwendung von PEK als Gehäusematerial bringt diverse Vorteile mit sich. PEK lässt sich als Thermoplast sehr viel einfacher verarbeiten und Umformen als metallische Materialien. Gegenüber in elektrochemischen Zellen übliche korrosive Substanzen ist es weitestgehend inert. Als elektrischer Isolator minimiert es die Möglichkeiten von Kurzschlüssen über das Gehäuse. Darüber hinaus weist es eine sehr viel niedrigere Dichte als metallische Gehäusematerialien auf. Bei gleicher Gehäusedicke ergeben sich durch die Verwendung von PEK. deutliche Gewichtsvorteile.

Es ist bevorzugt, dass sich die erfindungsgemäße Zelle durch mindestens eines der folgenden zusätzlichen Merkmale auszeichnet:
- In bevorzugten Ausführungsformen umfasst das Gehäuse zwei Gehäuseteile, die zusammen den Innenraum des Gehäuses ausbilden.
   Die zwei Gehäuseteile bestehen bevorzugt aus PEEK-Folien. Diese weisen bevorzugt eine Dicke im Bereich von 50 µm bis 500 µm auf. Innerhalb dieses Bereiches ist eine Dicke im Bereich von 100 µm bis 300 µm weiter bevorzugt.
- Die Gehäuseteile können mittels eines Klebers oder aber durch Verschweißung miteinander verbunden werden. Entsprechend sind die Gehäuseteile in bevorzugten Ausführungsformen über mindestens eine Schweiß- oder Klebenaht miteinander verbunden.

Eine Verbindung der Gehäuseteile durch Verschweißung ist grundsätzlich bevorzugt. Gehäuseteile, insbesondere Gehäusefolien, aus PEK lassen sich problemlos miteinander verschweißen, beispielsweise mittels eines Lasers.

Thermoplaste wie PEK absorbieren nur einen geringen Anteil der Laserstrahlung von Festkörperlasern in ihren üblichen Wellenlängenbereichen zwischen 800 bis 1100 nm. Damit diese Thermoplaste durch die Laserstrahlung effizient aufgeschmolzen und verschweißt werden können, können ihnen Additive zugesetzt werden, die ihre Absorptionseigenschaften verbessern. Geeignet sind hierfür alle anorganischen oder organischen Farbpigmente, die in dem genannten Wellenlängenbereich die Strahlung von Festkörperlasern absorbieren, beispielsweise Russ.

Das Verkleben der Gehäuseteile kann beispielsweise mittels eines Schmelzklebers oder eines chemisch abbindenden Klebstoffes erfolgen. Geeignet sind beispielsweise Polyimidklebebänder, Polyethylen- oder Polypropylen-Siegelfolien, Epoxidharz oder Polyurethan.

In weiteren bevorzugten Ausführungsformen der erfindungsgemäßen Zelle umfasst der Elektrodenverbundkörper
- mindestens einen Stromableiter, der elektrisch mit der mindestens einen positiven Elektrode des Elektrodenverbundkörpers verbunden ist
   und/oder
- mindestens einen Stromableiter, der elektrisch mit der mindestens einen negativen Elektrode des Elektrodenverbundkörpers verbunden ist.

Bevorzugt sind der oder die Stromableiter sind aus dem Innenraum des Gehäuses nach außen geführt, insbesondere zwischen den zwei Gehäuseteilen.

In besonders bevorzugten Ausführungsformen weist das Gehäuse mindestens zwei räumlich voneinander getrennte Schweiß- oder Klebenähte auf, wobei es bevorzugt ist, dass die Schweiß- oder Klebenähte jeweils einen ringförmigen Verlauf aufweisen.

Wie eingangs beschrieben wurde, besteht das zylindrische Gehäuse von Rund- und Knopfzellen klassisch in aller Regel aus zwei festen, meist metallischen Gehäuseteilen, zwischen denen eine elektrisch isolierende Dichtung angeordnet ist. Diese Zellen weisen stets genau einen Dichtbereich auf. Anders verhält sich dies bei der letztgenannten Ausführungsform erfindungsgemäßer Zellen. Die Anwesenheit der zentralen Durchbrechung oder der Ausnehmung bedingt, dass diese in der Regel zwei oder mehr Dichtbereiche aufweisen. Gegebenenfalls wird somit auch mehr als eine Dichtung benötigt, um die erfindungsgemäße Zelle abzudichten.

Das Gehäuse der erfindungsgemäßen Zelle weist in allen Ausführungsformen mit der zentralen Durchbrechung oder Ausnehmung entweder die Durchbrechung oder die Ausnehmung auf. Die zentrale Durchbrechung ist stets durchgängig ausgebildet, sie durchdringt das Gehäuse somit von einer Seite zu einer anderen Seite und ist entsprechend von zwei Seiten des Gehäuses aus zugänglich. Die Ausnehmung hingegen ist nicht durchgängig ausgebildet. Sie ist lediglich von einer Seite des Gehäuses aus zugänglich.

In besonders bevorzugten Ausführungsformen einer erfindungsgemäßen Zelle weist diese mindestens eines der folgenden zusätzlichen Merkmale auf:
- Die zentrale Durchbrechung oder die Ausnehmung weist eine zylindrische Geometrie auf.
- Das Gehäuse weist zwei ringkreisförmige, voneinander beabstandete und zueinander parallele Gehäuseböden sowie einen die Gehäuseböden verbindenden ringförmigen inneren Gehäusemantel und einen die Gehäuseböden verbindenden ringförmigen äußeren Gehäusemantel auf, wobei jeder der Gehäusemäntel und jeder der Gehäuseböden jeweils eine in den Innenraum weisende Innenseite und eine in eine entgegengesetzte Richtung weisende Außenseite hat.
- Der Elektrodenverbundkörper liegt als aus Elektrodenbändern und mindestens einem Separatorband gebildeter hohlzylindrischer Wickel vor, dessen Stirnseiten von den Längsrändern der Elektrodenbänder gebildet werden und in dessen Zentrum sich ein axialer Hohlraum mit Öffnungen im Zentrum der Stirnseiten befindet.

Um eine optimale Kapazitätsausnutzung zu erzielen, ist es zweckmäßig, die geometrischen Merkmale des ringförmigen Elektrodenverbundkörpers und des ringförmigen, flüssigkeitsdichten Gehäuses möglichst gut aufeinander abzustimmen. Bei Elektrodenverbundkörpern wie beispielsweise den in Fig. 3a und Fig. 3b der WO 2010/089152 A1 beschriebenen handelt es sich nahezu um perfekte Hohlzylinder. Diese können das Volumen des ringförmigen Innenraums am besten ausnutzen, wenn dieser ebenfalls die Form eines Hohlzylinders aufweist.

Die Durchbrechung ist bevorzugt als durchgängiges, zylindrisches Loch ausgebildet. Die Ausnehmung ist bevorzugt als zylindrisches Loch ausgebildet, das auf einer Seite verschlossen ist.

Eine erfindungsgemäße Zelle ist in bevorzugten Ausführungsformen durch mindestens eines der folgenden zusätzlichen Merkmale gekennzeichnet:
- Die Zelle ist eine Lithium-Ionen-Zelle, insbesondere eine sekundäre Lithium-Ionen-Zelle.
- Mindestens eine der Elektroden des Elektrodenverbundkörpers ist eine Lithium-interkalierende Elektrode.
- Der Elektrodenverbundkörper ist mit einem organischen Elektrolyten mit einem darin gelösten Lithium-Leitsalz getränkt.

Die Elektroden einer Lithium-Ionen-Zelle umfassen üblicherweise elektrochemisch aktive Komponenten und elektrochemisch inaktive Komponenten.

Als elektrochemisch aktive Komponenten (oft auch als Aktivmaterialien bezeichnet) kommen für sekundäre Lithium-Ionen-Systeme sämtliche Materialien in Frage, die Lithium-Ionen aufnehmen und wieder abgeben können. Stand der Technik sind diesbezüglich für die negative Elektrode insbesondere Materialien auf Kohlenstoffbasis wie graphitischer Kohlenstoff oder zur Interkalation von Lithium befähigte nichtgraphitische Kohlenstoffmaterialien. Weiterhin können auch metallische und halbmetallische Materialien zum Einsatz kommen, die mit Lithium legierbar sind, oder Komposite aus solchen Materialien mit kohlenstoffbasierten Materialien. Für die positive Elektrode kommen insbesondere Lithium-Metalloxid-Verbindungen und Lithium-Metallphosphat-Verbindungen wie LiCoO₂ und LiFePO₄ in Frage.

Als elektrochemisch inaktive Komponenten sind an erster Stelle Elektrodenbinder und Stromkollektoren zu nennen. Letztere dienen dazu, die elektrochemisch aktiven Komponenten möglichst großflächig elektrisch zu kontaktieren. Sie bestehen üblicherweise aus flächigen Metallsubstraten, beispielsweise aus Metallfolien oder einem Metallschaum oder einem metallisierten Vlies. Die Elektrodenbinder gewährleisten die mechanische Stabilität der Elektroden und sorgen für die Kontaktierung der Partikel aus elektrochemisch aktivem Material untereinander sowie zum Stromkollektor. Weiterhin fallen unter den Begriff insbesondere auch Leitmittel, also beispielsweise Ruß.

Die Zu- und Ableitung von Elektronen zu und aus den Elektroden des Elektrodenverbundkörpers erfolgt meist über Ableiterfahnen, die z.B. stirnseitig aus dem gebildeten gewickelten Verbundkörper herausragen können. Die Ableiterfahnen sind elektrisch an die Stromkollektoren angebunden oder ein Teil derselben.

Die erfindungsgemäße elektrochemische Zelle unterliegt grundsätzlich keiner Einschränkung hinsichtlich ihrer Größe, einschließlich der Verhältnisse der Durchmesser (Außendurchmesser / Innendurchmesser) oder ihrer Höhe. In einigen Ausführungsformen, in denen das Gehäuse als Hohlzylinder ausgebildet ist, ist es allerdings bevorzugt, dass ihre Höhe ihren Außendurchmesser maximal um den Faktor 2 überschreitet. In einer Weiterbildung ist das Verhältnis Höhe /Außendurchmesser ≤ 1.

Weitere Merkmale der Erfindung sowie aus der Erfindung resultierende Vorteile ergeben sich aus den Zeichnungen sowie aus der nachfolgenden Beschreibung der Zeichnungen. Die nachfolgend beschriebenen Ausführungsformen dienen lediglich zur Erläuterung und zum besseren Verständnis der Erfindung und sind in keiner Weise einschränkend zu verstehen.

### Figurenbeschreibung

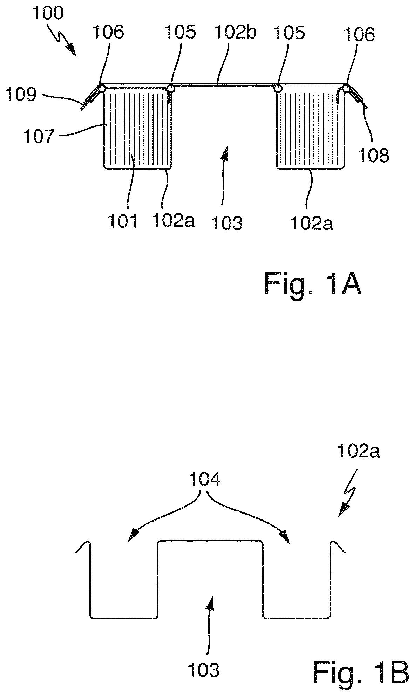

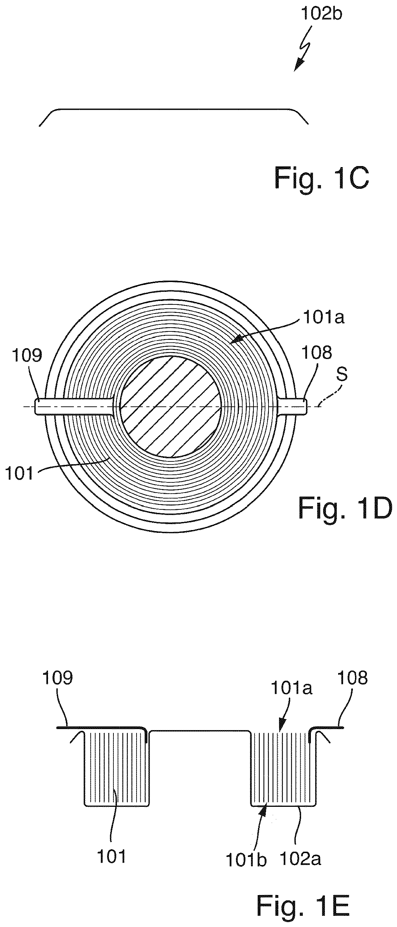

In Fig. 1A ist eine Ausführungsform einer erfindungsgemäßen elektrochemischen Zelle 100 dargestellt (schematische Querschnittsdarstellung). Diese umfasst einen ringförmigen Elektrodenverbundkörper 101 sowie ein Gehäuse 102 bestehend aus den Gehäuseteilen 102a und 102b. Die Gehäuseteile 102a und 102b sind zusätzlich separat dargestellt (Figs. 1B und 1C, schematische Querschnittsdarstellung). Darüber hinaus ist in den Figuren 1D (schematische Darstellung, Draufsicht von oben) und 1E (schematische Querschnittsdarstellung, Schnitt durch Linie S) das Gehäuseteil 102a samt einem darin eingesetzten Elektrodenverbundkörper 101 dargestellt.

Bei dem ringförmigen Elektrodenverbundkörper 101 handelt es sich um eine Lithium-Ionen-Zelle, die mit einem organischen Elektrolyten getränkt ist. Der Elektrodenverbundkörper 101 liegt als aus Elektrodenbändern und mindestens einem Separatorband gebildeter hohlzylindrischer Wickel vor, dessen Stirnseiten 101a und 101b von den Längsrändern der Elektrodenbänder gebildet werden.

Die Gehäuseteile 102a und 102b bestehen jeweils aus einer PEEK-Folie mit einer Dicke zwischen 100 und 150 µm. Das Gehäuseteil 102a weist zwei durch Tiefziehen gebildete Ausnehmungen auf, eine zentrale zylindrische Ausnehmung 103 und eine außenliegende hohlzylindrische Ausnehmung 104. Das Gehäuseteil 102b ist tellerförmig ausgebildet.

Die Gehäuseteile 102a und 102b sind über die beiden ringförmigen Schweißnähte 105 und 106 miteinander verbunden. Sie schließen gemeinsam den ringförmigen Innenraum 107 ein, in dem der Elektrodenverbundkörper 101 flüssigkeitsdicht eingeschlossen ist. Der Innenraum 107 ist wiederum um die Ausnehmung 103 herum angeordnet.

Der Elektrodenverbundkörper 101 umfasst zwei Stromableiter 108 und 109, die elektrisch mit der einen positiven und einer negativen Elektrode des Elektrodenverbundkörpers 101 verbunden sind. Die Stromableiter 108 und 109 sind zwischen den zwei Gehäuseteilen 102a und 102b hindurch aus dem Innenraum des Gehäuses 102 nach außen geführt.

## Patentansprüche

1. Elektrochemische Zelle mit den folgenden Merkmalen:
a. Sie umfasst einen ringförmig ausgebildeten Elektrodenverbundkörper mit mindestens einer positiven und mindestens einer negativen Elektrode.
b. Der Elektrodenverbundkörper ist mit einem Elektrolyten getränkt.
c. Sie umfasst ein als Hohlzylinder ausgebildetes Gehäuse, das eine zentrale Durchbrechung oder Ausnehmung sowie einen flüssigkeitsdicht ausgebildeten, ringförmigen, um die zentrale Durchbrechung oder Ausnehmung herum angeordneten Innenraum aufweist.
d. Der mit dem Elektrolyten getränkte ringförmige Elektrodenverbundkörper ist in dem ringförmigen Innenraum angeordnet.
e. Das Gehäuse besteht aus PEK.

2. Zelle nach Anspruch 1, **gekennzeichnet durch** das folgende zusätzliche Merkmal:
a. Das Gehäuse umfasst zwei Gehäuseteile, die zusammen den Innenraum des Gehäuses ausbilden.

3. Zelle nach Anspruch 2, **gekennzeichnet durch** das folgende zusätzliche Merkmal:
a. Die zwei Gehäuseteile bestehen aus PEK-Folien, die bevorzugt eine Dicke im Bereich von 50 µm bis 500 µm aufweisen.

4. Zelle nach Anspruch 2 oder 3, **gekennzeichnet durch** das der folgende zusätzliche Merkmal:
a. Die Gehäuseteile sind über mindestens eine Schweiß- oder Klebenaht miteinander verbunden.

5. Zelle nach Anspruch 1 oder nach Anspruch 2, **gekennzeichnet durch** die folgenden zusätzlichen Merkmale:
a. Der Elektrodenverbundkörper umfasst mindestens einen Stromableiter, der elektrisch mit der mindestens einen positiven Elektrode des Elektrodenverbundkörpers verbunden ist.
b. Der Elektrodenverbundkörper umfasst mindestens einen Stromableiter, der elektrisch mit der mindestens einen negativen Elektrode des Elektrodenverbundkörpers verbunden ist.
c. Die Stromableiter sind aus dem Innenraum des Gehäuses nach außen geführt, insbesondere zwischen den zwei Gehäuseteilen.

6. Zelle nach einem der vorhergehenden Ansprüche, **gekennzeichnet durch** mindestens eines der folgenden zusätzlichen Merkmale:
a. Das Gehäuse weist mindestens zwei räumlich voneinander getrennte Schweiß- oder Klebenähte auf.

7. Zelle nach einem der vorhergehenden Ansprüche, **gekennzeichnet durch** mindestens eines der folgenden zusätzlichen Merkmale:
a. Die Schweiß- oder Klebenähte weisen jeweils einen ringförmigen Verlauf auf.

8. Zelle nach einem der vorhergehenden Ansprüche, **gekennzeichnet durch** mindestens eines der folgenden zusätzlichen Merkmale:
a. Die zentrale Durchbrechung oder Ausnehmung weist eine zylindrische Geometrie auf.
b. Das Gehäuse umfasst zwei ringkreisförmige, voneinander beabstandete und zueinander parallele Gehäuseböden sowie einen die Gehäuseböden verbindenden ringförmigen inneren Gehäusemantel und einen die Gehäuseböden verbindenden ringförmigen äußeren Gehäusemantel, wobei jeder der Gehäusemäntel und jeder der Gehäuseböden jeweils eine in den Innenraum weisende Innenseite und eine in eine entgegengesetzte Richtung weisende Außenseite aufweisen.
c. Der Elektrodenverbundkörper liegt als aus Elektrodenbändern und mindestens einem Separatorband gebildeter hohlzylindrischer Wickel vor, dessen Stirnseiten von den Längsrändern der Elektrodenbänder gebildet werden und in dessen Zentrum sich ein axialer Hohlraum mit Öffnungen im Zentrum der Stirnseiten befindet.

9. Zelle nach einem der vorhergehenden Ansprüche, **gekennzeichnet durch** mindestens eines der folgenden zusätzlichen Merkmale:
a. Die Zelle ist eine Lithium-Ionen-Zelle.
b. Mindestens eine der Elektroden des Elektrodenverbundkörpers ist eine Lithium-interkalierende Elektrode.
c. Der Elektrodenverbundkörper ist mit einem organischen Elektrolyten mit einem darin gelösten Lithium-Leitsalz getränkt.

## Claims

1. Electrochemical cell having the following features:
a. It comprises a composite electrode body of ring-shaped formation, with at least one positive and at least one negative electrode.
b. The composite electrode body has been impregnated with an electrolyte.
c. It comprises a housing of hollow-cylinder formation which comprises a central through-hole or recess and also a ring-shaped interior which is of liquid-impervious formation and is arranged around the central through-hole or recess.
d. The ring-shaped composite electrode body impregnated with the electrolyte is arranged in the ring-shaped interior.
e. The housing consists of PEK.

2. Cell according to Claim 1, **characterized by** the following additional feature:
a. The housing comprises two housing parts which together form the interior of the housing.

3. Cell according to Claim 2, **characterized by** the following additional feature:
a. The two housing parts consist of PEK films preferably having a thickness in the range from 50 µm to 500 µm.

4. Cell according to Claim 2 or 3, **characterized by** the following additional feature:
a. The housing parts are joined to one another via at least one welded or bonded seam.

5. Cell according to Claim 1 or according to Claim 2, **characterized by** the following additional features:
a. The composite electrode body comprises at least one output conductor electrically connected to the at least one positive electrode of the composite electrode body.
b. The composite electrode body comprises at least one output conductor electrically connected to the at least one negative electrode of the composite electrode body.
c. The output conductors are guided out of the interior of the housing to the outside, especially between the two housing parts.

6. Cell according to any of the preceding claims, **characterized by** at least one of the following additional features:
a. The housing has at least two spatially separated welded or bonded seams.

7. Cell according to any of the preceding claims, **characterized by** at least one of the following additional features:
a. The welded or bonded seams each have a ring-shaped profile.

8. Cell according to any of the preceding claims, **characterized by** at least one of the following additional features:
a. The central through-hole or recess has a cylindrical geometry.
b. The housing comprises two circular ring-shaped housing ends that are spaced apart from one another and parallel to one another, and also a ring-shaped inner housing shell that connects the housing ends and a ring-shaped outer housing shell that connects the housing ends, with each of the housing shells and each of the housing ends having an inside that points into the interior and an outside that points in an opposite direction.
c. The composite electrode body takes the form of a hollow cylindrical winding formed from electrode tapes and at least one separator tape, and having end faces that are formed by the longitudinal edges of the electrode tapes, in the centre of which winding there is an axial hollow cavity having openings in the centre of the end faces.

9. Cell according to any of the preceding claims, **characterized by** at least one of the following additional features:
a. The cell is a lithium ion cell.
b. At least one of the electrodes of the composite electrode body is a lithium-intercalating electrode.
c. The composite electrode body has been impregnated with an organic electrolyte with a conductive lithium salt dissolved therein.

## Revendications

1. Cellule électrochimique avec les caractéristiques suivantes :
a. elle comprend un corps de liaison d'électrode réalisé en forme d'anneau avec au moins une électrode positive et au moins une électrode négative.
b. le corps de liaison d'électrode est imbibé d'un électrolyte ;
c. elle comprend un carter réalisé sous la forme d'un cylindre creux qui comporte un passage ou évidement central ainsi qu'un espace intérieur en forme d'anneau réalisé de façon étanche aux fluides, disposé autour du passage central ou de l'évidement ;
d. le corps de liaison d'électrode en forme d'anneau imbibé d'électrolyte est disposé dans l'espace intérieur en forme d'anneau ;
e. le carter est en PEK.

2. Cellule selon la revendication 1, **caractérisée par** la caractéristique supplémentaire suivante :
a. le carter comprend deux parties de carter formant ensemble l'espace intérieur du carter.

3. Cellule selon la revendication 2, **caractérisée par** la caractéristique supplémentaire suivante :
a. les deux parties de carter se composent de films PEK présentant de façon préférée une épaisseur dans la plage de 50 um à 500 µm.

4. Cellule selon la revendication 2 ou 3, **caractérisée par** la caractéristique supplémentaire suivant :
a. les parties de carter sont reliés entre eux via au moins un joint soudé ou collé.

5. Cellule selon la revendication 1 ou 2, **caractérisée par** les caractéristiques supplémentaires suivantes :
a. le corps de liaison d'électrode comprend au moins un conducteur en aval qui est relié électriquement à l'au moins une électrode positive du corps de liaison d'électrode ;
b. le corps de liaison d'électrode comprend au moins un conducteur en aval qui est relié électriquement à l'au moins une électrode négative du corps de liaison d'électrode ;
c. les conducteurs en aval sont guidés vers l'extérieur hors de l'espace intérieur du carter, notamment entre les deux parties de carter.

6. Cellule selon l'une quelconque des revendications précédentes, **caractérisée par** au moins une des caractéristiques supplémentaires suivantes :
a. le carter comporte au moins deux joints soudés ou

7. Cellule selon l'une quelconque des revendications précédentes, **caractérisée par** au moins une des caractéristiques supplémentaires suivantes :
a. les joints soudés ou collés présentent respectivement une courbe en forme d'anneau.

8. Cellule selon l'une quelconque des revendications précédentes, **caractérisée par** la présence d'au moins une des caractéristiques supplémentaires suivantes :
a. le passage ou évidement central présente une forme géométrique cylindrique.
b. le carter comprend deux fonds de carter en forme d'anneau séparés l'un de l'autre et parallèles l'un par rapport à l'autre ainsi qu'une enveloppe de carter intérieure en forme d'anneau reliant les fonds de carter et une enveloppe de carter extérieure en forme d'anneau reliant les fonds de carter, chacune des enveloppes de carter et chacun des fonds de carter comportant respectivement un côté intérieur orienté dans l'espace intérieur et un côté extérieur orienté dans une direction opposée ;
c. le corps de liaison d'électrode est présent sous la forme d'un enroulement cylindrique creux formé à partir de bandes d'électrode et d'au moins une bande de séparation dont les côtés avant sont formés par les bords longitudinaux des bandes d'électrode et que l'on trouve dans leur centre un espace creux axial avec des ouvertures pratiquées au centre des côtés avant.

9. Cellule selon l'une quelconque des revendications précédentes, **caractérisée par** au moins une des caractéristiques supplémentaires suivantes :
a. la cellule est une cellule lithium-ions ;
b. au moins une des électrodes du corps de liaison d'électrode est une électrode d'intercalation au lithium ;
c. le corps de liaison d'électrode est imbibé d'un électrolyte organique comprenant un sel conducteur au lithium dissout dedans.
